# EUROPEAN PATENT APPLICATION

(11) **EP 3 892 094 A1**
(43) Date of publication of application: **13.10.2021**
(21) Application number: 19893379.8
(22) Date of filing: 22.05.2019
(51) Int. Cl.: A01M 1/04, A01M 1/08

(54) **INSECT TRAP**

(30) Priority: 07.12.2018 JP 2018229608
(71) Applicant: Hikari Bio Inc., Takamatsu-shi, Kagawa, 761-8042 (JP)
(72) Inventor: HIROTA Norifumi, Takamatsu-shi, Kagawa 761-8042 (JP)
(74) Representative: Wilson Gunn
(86) International application number: PCT/JP2019/020202
(87) International publication number: WO 2020/115927

(57) **Abstract**

Provided is an insect trap that efficiently attract target pests to improve the probability of trapping/exterminating the target pests and in turn increase the production amount of crops. To attain the above object, an insect trap (100) according to the present invention includes; a light source (200) emitting light that causes phototaxis in insects; a mortar-shaped reflection part (160) disposed vertically below the light source (200) and reflecting the light emitted from the light source (200) vertically upward; a cylindrical part (170) disposed vertically below the mortar-shaped reflection part (160) so as to extend from the mortar-shaped reflection part (160); a fan (190) generating an airflow in a direction sucking air from the mortar-shaped reflection part (160) into the cylindrical part (170); and a trapping net (310) disposed vertically below the fan (190) and trapping insects. The light source has a maximum emission peak at about 560 nm or about 565 nm in emission wavelength, and the mortar-shaped reflection part (160) has a coating film with a color similar to a hue within the range of 10YR to 10Y in the Munsell color system.

## Description

### Technical Field

The present invention relates to an insect trap for attracting and exterminating pests, which is used in a farm to reduce feeding damage to cultivated crops caused by pests.

### Background Art

The typical example of a means for pest control in a farm is pesticide spraying. However, insects have become resistant to pesticides, and efficacy of the pesticide spraying has thus significantly decreased in recent years. Therefore, pest control heavily dependent on the pesticide needs to be reviewed.

A pest control method of attracting and trapping pests using light has been gaining popularity as one of pest control strategies . Such a method traditionally uses a blue fluorescent lamp as an attraction light source. The blue fluorescent lamp, which has a radiation wavelength band of 300 nm to 550 nm, causes positive phototaxis mainly in nocturnal insects to thereby attract and trap them.

As the pest control strategy using the above blue fluorescent lamp, Patent Document 1 (JP 2000-49A) discloses an apparatus for trapping pests and maintaining sanitary environment. This apparatus includes a light source having a wavelength of 300 nm to 600 nm, a pest light attracting trap disposed around the light source, and a photocatalyst supporting molded product which supports a photocatalyst excited by the light source and is disposed adjacently to the pest light attracting trap.

Patent Document 1: JP 2000-49A

### Disclosure of the Invention

### Problems to be Solved by the Invention

However, Bemisia tabaci which causes tomato yellow leaf curl disease for tomato, lisianthus, and the like and causes chlorotic yellows disease for Cucurbitaceae such as melon, cucumber, and the like or Thrips palmi which causes yellow dwarf disease for Cucurbitaceae and Compositae is attracted to a light having a long wavelength range of 450 nm or longer, so that when a blue fluorescent lamp that attracts mainly nocturnal insects is used as a light source, the attraction efficiency for target pests is not necessarily high. This reduces the probability of trapping/exterminating the target pests, resulting in poor trapping performance.

The above-described tomato yellow leaf curl disease, chlorotic yellows disease, yellow dwarf disease, and the like are transmitted to crops through the pests. Thus, a reduction in the probability of trapping/exterminating the target pests significantly adversely affects the production amount of crops.

### Means for Solving the Problems

The present invention has been made to solve the above problem, and an object thereof is to provide an insect trap having a light source effectively attracting white flies, thrips, aphids (winged), leafminer flies, and flies.

To attain the above object, an insect trap according to a first aspect of the present invention includes: a light source emitting light that causes phototaxis in insects; a mortar-shaped reflection part disposed vertically below the light source and reflecting the light emitted from the light source vertically upward; a cylindrical part disposed vertically below the mortar-shaped reflection part so as to extend from the mortar-shaped reflection part; a fan generating an airflow in a direction sucking air from the mortar-shaped reflection part into the cylindrical part; and a net disposed vertically below the fan and trapping insects, wherein the light source has a maximum emission peak at about 560 nm or about 565 nm in emission wavelength, and the mortar-shaped reflection part has a coating film with a color similar to a hue within the range of 10YR to 10Y in the Munsell color system.

An insect trap according to a second aspect of the present invention includes: a light source emitting light that causes phototaxis in insects; a mortar-shaped reflection part disposed vertically below the light source and reflecting the light emitted from the light source vertically upward; a cylindrical part disposed vertically below the mortar-shaped reflection part so as to extend from the mortar-shaped reflection part; a fan generating an airflow in a direction sucking air from the mortar-shaped reflection part into the cylindrical part; and a net disposed vertically below the fan and trapping insects, wherein the light source has two local emission peaks in the range of about 500 nm to about 650 nm in emission wavelength, and the mortar-shaped reflection part has a coating film with a color similar to a hue within the range of 10YR to 10Y in the Munsell color system.

An insect trap according to a third aspect of the present invention includes: a light source emitting light that causes phototaxis in insects; a mortar-shaped reflection part disposed vertically below the light source and reflecting the light emitted from the light source vertically upward; a cylindrical part disposed vertically below the mortar-shaped reflection part so as to extend from the mortar-shaped reflection part; a fan generating an airflow in a direction sucking air from the mortar-shaped reflection part into the cylindrical part; and a net disposed vertically below the fan and trapping insects, wherein the light source has two local emission peaks at about 545 nm and about 575 nm in emission wavelength, and the mortar-shaped reflection part has a coating film with a color similar to a hue within the range of 10YR to 10Y in the Munsell color system.

In the insect trap according to the present invention, when emission intensities of the light source at about 545 nm and about 575 nm are A and B, respectively, a relationship of 0.7 < A/B < 1.7 is satisfied.

An insect trap according to a fourth aspect of the present invention includes: a light source emitting light that causes phototaxis in insects; a mortar-shaped reflection part disposed vertically below the light source and reflecting the light emitted from the light source vertically upward; a cylindrical part disposed vertically below the mortar-shaped reflection part so as to extend from the mortar-shaped reflection part; a fan generating an airflow in a direction sucking air from the mortar-shaped reflection part into the cylindrical part; and a net disposed vertically below the fan and trapping insects, wherein the light source has three local emission peaks at about 545 nm, about 565 nm, and about 575 in emission wavelength, and the mortar-shaped reflection part has a coating film with a color similar to a hue within the range of 10YR to 10Y in the Munsell color system.

In the insect trap according to the present invention, when emission intensities of the light source at about 545 nm and about 575 nm are A and B, respectively, a relationship of 0.7 < A/B < 1.7 is satisfied.

In the insect trap according to the present invention, the light source is constituted by a fluorescent lamp applied with a coating film thereon.

In the insect trap according to the present invention, the light source is constituted by an LED device.

In the insect trap according to the present invention, a mesh having a mesh size less than 5 mm is disposed in an insect suction space of the mortar-shaped reflection part.

The insect trap according to the present invention further includes an auxiliary light source having a maximum emission peak at about 565 nm in emission wavelength.

In the insect trap according to the present invention, the auxiliary light source is constituted by an LED device.

### Advantageous Effects of the Invention

The insect trap according to the present invention uses a light source having a long wavelength range of 450 nm or longer, more specifically, a light source having a maximum emission peak at about 560 nm or about 566 nm to attract and trap target pests such as white flies, thrips, aphids (winged), leafminer flies, and flies. Further, the insect trap according to the present invention is provided with a mortar-shaped reflection part having a coating film with a color similar to a hue within the range of 10YR to 10Y in the Munsell color system and efficiently attracts the target pests by a synergetic effect with the above light source to thereby improve the probability of trapping/exterminating the target pests and increase the production amount of crops.

### Brief Description of the Drawings

FIG. 1 is a view for schematically explaining an insect trap 100 according to a first embodiment of the present invention;
FIG. 2 is a view illustrating a mesh 140 disposed in a suction space between a mortar-shaped reflection part 160 and a conical part 150;
FIG. 3 is a view for explaining a configuration for verifying effects of a light source 200 according to the first embodiment of the present invention;
FIG. 4 is a view for schematically explaining an insect trap 100 according to a second embodiment of the present invention;
FIG. 5 is a view for explaining the positional relationship among the components of the insect trap 100 according to the second embodiment;
FIG. 6 is a view for schematically explaining an insect trap 100 according to a third embodiment of the present invention;
FIG. 7 is a view for explaining a configuration for verifying effects of an auxiliary light source 220 according to the third embodiment of the present invention;
FIG. 8 is a view for explaining the configuration of a light source 200 used for an insect trap 100 according to a fourth embodiment of the present invention;
FIG. 9 is a spectral characteristic diagram of a light source 200 used for an insect trap 100 according to the fourth embodiment of the present invention;
FIG. 10 is a spectral characteristic diagram of a light source 200 used for an insect trap 100 according to a fifth embodiment of the present invention;
FIG. 11 is a spectral characteristic diagram of a light source 200 used for an insect trap 100 according to a sixth embodiment of the present invention; and
FIGS. 12A to 12F are schematic spectral characteristic diagrams of the light source 200 and auxiliary light source 220 used for the insect trap 100 according to the present invention.

### Best Mode for Carrying Out the Invention

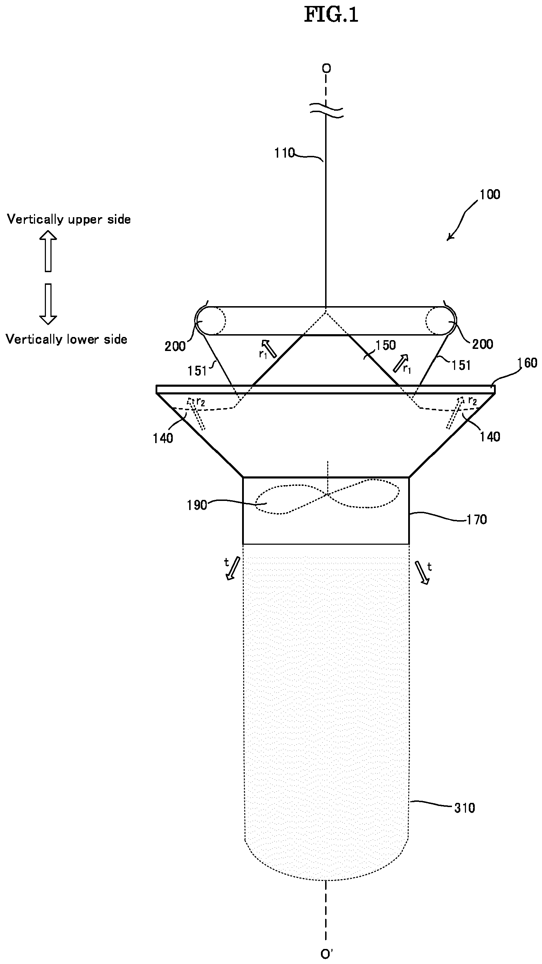

Hereinafter, embodiments of the present invention will be described with reference to the drawings. FIG. 1 is a view for schematically explaining an insect trap 100 according to a first embodiment of the present invention.

A light source 200 according to the present invention is assumed to cause basically positive phototaxis in target pests such as white flies, thrips, aphids (winged), leafminer flies, and flies in order to attract them. On the other hand, the light source 200 may sometimes cause negative phototaxis in insects of other types (noctuid moths, true bugs, etc.).

The insect trap 100 using this light source 200 is assumed to be hung by, e.g., a hanging wire 110 when being used. The insect trap 100 has a substantially symmetric shape with respect to a virtual axis O-O' along which the hanging wire 110 extends. For example, the light source 200 has a substantially donut shape.

The hanging wire 110 extends from a conical part 150. Fixing fittings 151 extend upward from three locations on the upper side of the peripheral surface of the conical part 150 to support the light source 200.

The number of the fixing fittings 151 to be provided on the peripheral surface of the conical part 150 is not limited to three.

The light source 200 is a fluorescent tube (white fluorescent lamp having a color temperature of 4200 K) on the surface of which a coating film is formed. The fluorescent tube emits light using a not-shown ballast. When emitting, the light source 200 functions as a light source for attracting target pests. Although an annular fluorescent lamp is used as the light source 200 in the present embodiment, a straight tube lamp, a twin-type fluorescent lamp, and the like may be used.

The coating film formed on the surface of the fluorescent tube functions as an optical filter to block emitted light having a wavelength shorter than about 500 nm and to allow emitted light having a wavelength longer than about 500 nm to efficiently pass therethrough. Such a coating film is formed by applying a mixture of hydroxyl group-containing acrylic resin and benzimidazolone and a mixture of epoxy resin, clear, curing agent (isocyanate compound), and thinner onto the fluorescent tube.

The light source 200 applied with such a coating film preferably has two local emission peaks at about 545 nm and about 575 nm in emission wavelength; alternatively, the light source 200 may have two local emission peaks in the range of about 500 nm to about 650 nm in emission wavelength.

When the emission intensity at about 545 nm and the emission intensity at about 575 nm are A and B, respectively, the light source 200 according to the present invention preferably satisfies a relationship of 0.7 < A/B < 1.7.

It is more preferable for the light source 200 according to the present invention to satisfy a relationship of 1.0 < A/B < 1.5. Further, it is still more preferable for the light source 200 according to the present invention to satisfy a relationship of 1.1 < A/B < 1.4.

The light source 200 having the two local emission peaks at about 545 nm and about 575 nm in emission wavelength as described above can efficiently attract white flies, thrips, aphids (winged), leafminer flies, and flies.

In the insect trap 100, not-shown support poles extend from three locations at the bottom portion of the conical part 150 and connect the conical part 150 to a mortar-shaped reflection part 160. Further, a cylindrical part 170 extends vertically downward from the bottom portion of the mortar-shaped reflection part 160.

The space (suction space) between the bottom potion of the conical part 150 and the mortar-shaped reflection part 160, other than a portion where the support poles are present, serves as a gap, allowing pests to be sucked and light from the light source 200 to travel downward therethrough.

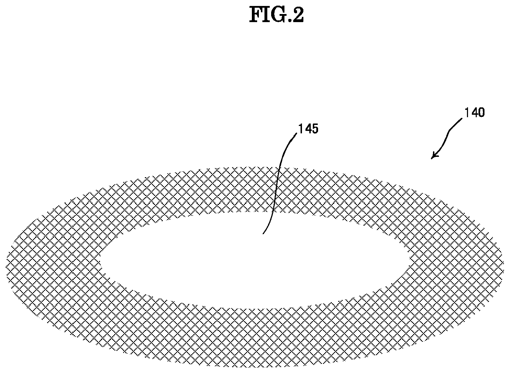

A grid member having a mesh size less than 5 mm is disposed in the suction space as the gap formed between the mortar-shaped reflection part 160 and the conical part 150. In the present embodiment, a mesh 140 is used as the grid member. The mesh 140 has a hole part 145 formed along the outer peripheral edge of the conical part 150. FIG. 2 is a view illustrating the mesh 140 disposed in the suction space between the mortar-shaped reflection part 160 and the conical part 150.

If the mesh 140 is not provided, honeybees or bumblebees, which are used for crop bleeding, are trapped in a trapping net 310 through the suction space, which may affect crop bleeding. In the insect trap 100 according to the present invention, the mesh 140 having a mesh size less than 5 mm is disposed in the suction space to prevent bees having a body size larger than that of target pests from passing through the suction space and thus be trapped in the trapping net 310. Thus, the mesh 140 functions as a protective net for bees.

The mortar-shaped reflection part 160, conical part 150, and cylindrical part 170 are made of iron or stainless steel and are preferably applied with a coating film having weather resistance.

The mesh 140 preferably has a color similar to a hue within the range of 10YR to 10Y in the Munsell color system.

In particular, the mortar-shaped reflection part 160 and conical part 150 preferably have a coating film with a color similar to a hue within the range of 10YR to 10Y in the Munsell color system. The color similar to a hue within the range of 10YR to 10Y in the Munsell color system corresponds to a color ranging from an intermediate color between orange and yellow to yellow.

The insect trap 100 according to the present invention uses the light source 200 having a long wavelength range of 450 nm or longer, more specifically, having two local emission peaks at about 545 nm and about 575 nm in emission wavelength in order to attract and trap target pests such as white flies, thrips, aphids (winged), leafminer flies, and flies. Further, the insect trap 100 according to the present invention is provided with the mortar-shaped reflection part 160 and conical part 150 having a coating film with a color similar to a hue within the range of 10YR to 10Y in the Munsell color system and efficiently attracts the target pests by a synergetic effect with the above light source 200 to thereby improve the probability of trapping/exterminating the target pests and in turn increase the production amount of crops.

The cylindrical part 170 has inside thereof a fan 190 driven into rotation by a not-shown motor. When the fan 190 rotates, an airflow for sucking air in the mortar-shaped reflection part 160 vertically downward is generated at the mesh 140 between the conical part 150 and the mortar-shaped reflection part 160.

Pests attracted to the light source 200 are guided to the trapping net 310 through the cylindrical part 170 by the airflow generated by the fan 190 in a direction sucking air from the opening of the mortar-shaped reflection part 160 into the cylindrical part 170.

When the light source 200 emits light, the slope of the conical part 150 positioned vertically below the light source 200 functions as a reflecting surface to form reflected light r₁.

Further, when the light source 200 emits light, the inner surface of the mortar-shaped reflection part 160 positioned vertically below the light source 200 functions as a reflecting surface to form reflected light r₂.

Further, when the light source 200 emits light, illumination light t is emitted from the lower portion of the cylindrical part 170. Pests in the lower portion of the mortar-shaped reflection part 160 are also attracted to the illumination light t as an attraction light source, sucked by the airflow generated by the fan 190, and finally trapped.

Further, the coating film, which is applied to the mortar-shaped reflection part 160 and conical part 150, having a color similar to a hue within the range of 10YR to 10Y in the Munsell color system, acts synergistically with the light source 200 to thereby efficiently attract the target pests.

Thus, in the insect trap 100 according to the present invention, light from the light source 200 also reaches the lower-side area through a long transparent cylindrical part 170, so that the pests in this area are attracted to the light source 200, trapped, and exterminated, thereby allowing further improvement in probability of trapping/exterminating the target pests, which can lead to a reduction in damage to crops such as fruits and vegetables due to pests.

Further, the illumination light t gives crops the same effect as an increase in sunshine duration and can thus contribute to an increase in the production amount of crops.

Although the light source 200 has substantially the donut shape in the present embodiment, the shape of the light source 200 is not limited to this in the insect trap 100 according to the present invention.

In the insect trap 100 according to the present invention, the mesh size of the trapping net 310 is preferably in the range of about 0.1 mm to 0.3 mm. Further, trapping nets 310 having different mesh sizes may be used in the form of double layers.

The mesh size of the trapping net 310 for trapping thrips is preferably 0.13 mm. The mesh size of the trapping net 310 for trapping pests other than the thrips is preferably about 0.2 mm x 0.4 mm.

For example, it is preferable to use trapping nets 310 having a mesh size of about 0.1 mm to 0. 3 mm and a mesh size of about 5 mm in the form of double layers. Even when a comparatively large-sized insect is trapped, it cannot bite and tear a coarse portion, so that trapped pests will not escape from the net, thereby allowing further improvement in probability of exterminating the target pests, which can lead to a reduction in pest damage to crops such as fruits and vegetables.

In the present embodiment, the insect trap 100 is hung by the hanging wire 110, and the virtual axis O-O' along which the hanging wire 110 extends is parallel to the vertical direction. However, depending on the crops such as fruits and vegetables, the insect trap 100 may be set such that the virtual axis O-O' is parallel to the horizontal direction.

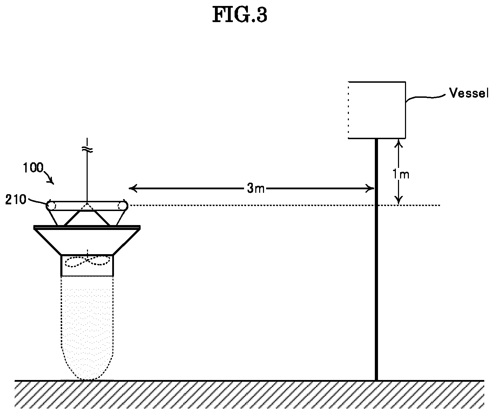

The following describes verification of effects of the light source 200 according to the embodiment of the present invention. FIG. 3 is a view for explaining a configuration for verifying effects of the light source 200 according to the first embodiment of the present invention.

The optimum ratio of the emission intensity of the light source 200 was verified using the configuration illustrated in FIG. 3.

In FIG. 3, a vessel in which 200 greenhouse whitefly adults were put was installed in a place 1 m above and 3 m distant from the light source 200. A mesh material, through which the greenhouse whitefly adults can freely enter or exit from the vessel, was provided to one surface of the vessel. The greenhouse whitefly adults used were bred in advance.

The one surface of the vessel was opposed to the light source 200 so as to allow the greenhouse whitefly adults to fly only from the side facing the light source 200. The greenhouse whitefly adults that approached the light source 200 were sucked to the insect trap 100 and taken in the trapping net 310. The number of trapped insects was counted four hours after the installation of the vessel and insect trap 100. The experiment was carried out in a dark room at a temperature of 25°C. The results are shown in Table 1.

**[Table 1]**

| A/B | Number of trapped insects | Ratio when the number of trapped insects when A/B is 1.2 is taken as 1 |
|---|---|---|
| 0.7 | 81 | 0.44 |
| 0.8 | 103 | 0.56 |
| 0.9 | 142 | 0.78 |
| 1.0 | 161 | 0.88 |
| 1.1 | 179 | 0.98 |
| 1.2 | 183 | 1 |
| 1.3 | 181 | 0.99 |
| 1.4 | 173 | 0.95 |
| 1.5 | 160 | 0.87 |
| 1.6 | 89 | 0.49 |
| 1.7 | 47 | 0.26 |

As shown in Table 1, the number of trapped insects is largest when the ratio A/B is 1.2 (A is the emission intensity at about 545 nm, and B is the emission intensity at about 575 nm). Thus, normalization is made with the number of trapped insects when the ratio A/B is 1.2 taken as 1.

Referring to Table 1, when the light source 200 according to the present invention satisfies the relationship of 0.7 < A/B < 1.7, the insect trap 100 can trap target pests.

Further, when the light source 200 according to the present invention satisfies a relationship of 1.0 < A/B < 1.5, the number of trapped insects can be 80% or more of that when A/B is 1.2.

Further, when the light source 200 according to the present invention satisfies a relationship of 1.1 < A/B < 1.4, the number of trapped insects can be 90% or more of that when A/B is 1.2.

Thus, the insect trap 100 according to the present invention uses the light source 200 having a long wavelength range of 450 nm or longer, more specifically, having two local emission peaks at about 545 nm and about 575 nm in emission wavelength to attract and trap target pests such as white flies, thrips, aphids (winged), leafminer flies, and flies. Further, the insect trap 100 is provided with the mortar-shaped reflection part 160 and conical part 150 having a coating film with a color similar to a hue within the range of 10YR to 10Y in the Munsell color system and efficiently attracts the target pests by a synergetic effect with the above light source to thereby improve the probability of trapping/exterminating the target pests and in turn increase the production amount of crops.

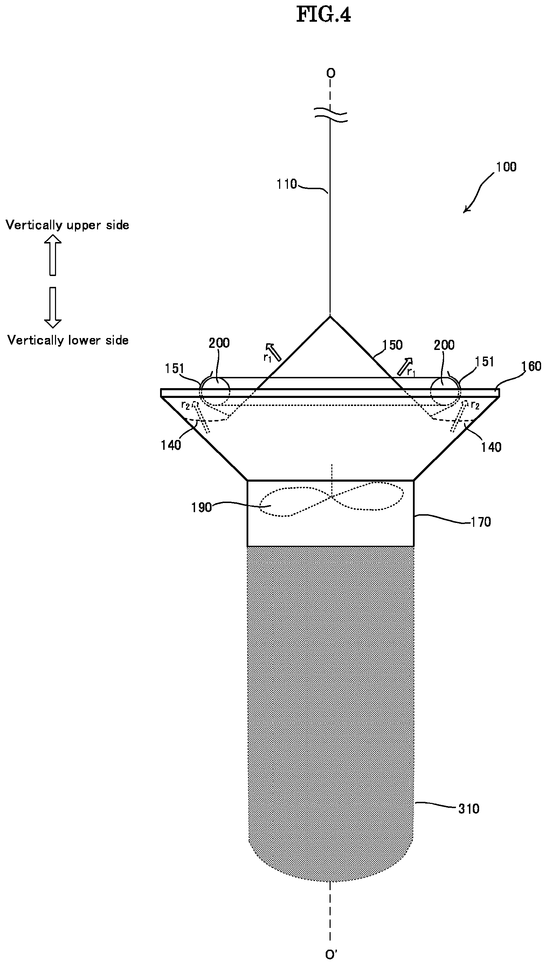

The following describes another embodiment of the present invention. FIG. 4 is a view for schematically explaining an insect trap 100 according to a second embodiment of the present invention.

When the insect trap 100 is used at night, it may be necessary to reduce irradiation to crops. For example, for crops such as chrysanthemum and strawberry, flower bud differentiation is significantly affected by lighting of the light source 200 of the insect trap 100 during the night.

Thus, the insect trap 100 according to the second embodiment is configured to minimize leakage of light from the light source 200 below the insect trap 100.

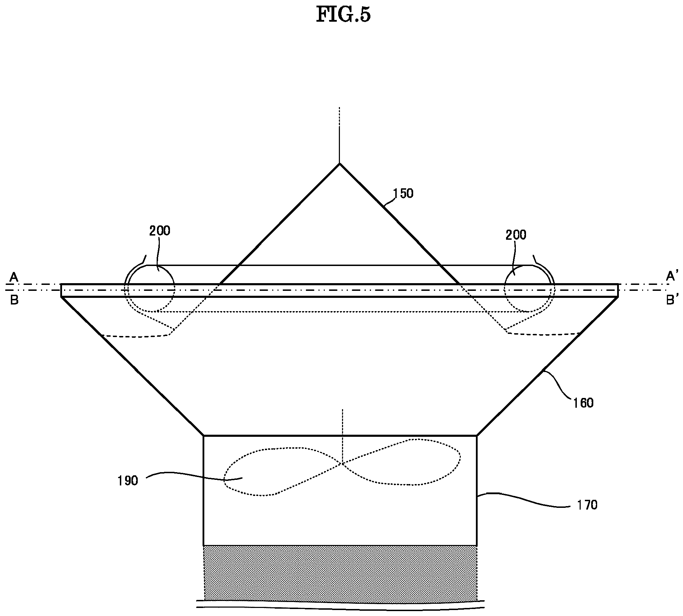

FIG. 5 is an enlarged view of the main part of the insect trap 100 illustrated in FIG. 4, which explains the positional relationship among the components of the insect trap 100 according to the second embodiment of the present invention. In FIG. 5, the line A-A' denotes a line included in a horizontal plane including an opening end portion on the upper side of the mortar-shaped reflection part 160. The line B-B' denotes a line including the vertically middle plane of the light source 200.

The insect trap 100 according to the second embodiment is featured in that the line B-B' is positioned vertically below the line A-A'. In addition, the trapping net 310 with black color is used to absorb light so as to minimize leakage of light to crops below the insect trap 100. In this insect trap 100 according to the second embodiment, the illuminance on the crop side can be reduced to 1 lux or less.

In addition to the effects described in the first embodiment, the insect trap 100 of the second embodiment can be effectively used for crops such as chrysanthemum and strawberry which are significantly affected by night-time lighting of the insect trap 100.

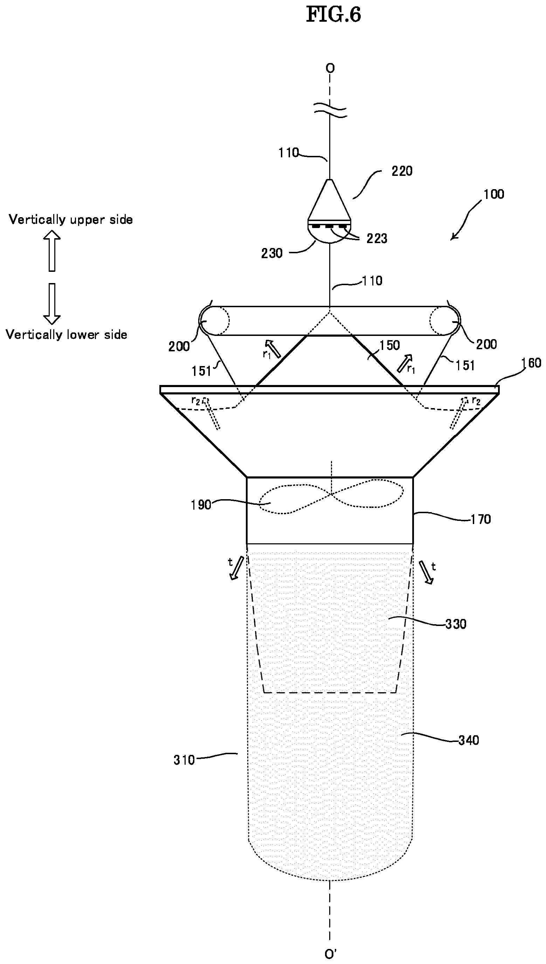

The following describes another embodiment of the present invention. FIG. 6 is a view for schematically explaining an insect trap 100 according to a third embodiment of the present invention. The insect trap 100 according to the third embodiment differs from the insect trap 100 according to the first embodiment in that an auxiliary light source 220 is provided in addition to the light source 200. The auxiliary light source 220 is provided in the middle of the hanging wire 110.

The auxiliary light source 220 is different in type from the light source 200 used in the first embodiment. The light source 200 used in the first embodiment is a fluorescent lamp applied with a predetermined coating film thereon, whereas the auxiliary light source 220 is an LED (Light Emitting Diode) device.

The auxiliary light source 220 is preferably provided in the middle of the hanging wire 110, for example, but not limited to this. The auxiliary light source 220 is constituted of a plurality of LED devices 223. In general, light emitted from the LED devices 223 has directivity. Since the presence of directivity may prevent efficient attraction of pests, a transparent light diffusion resin 23 is provided as a means for diffusing the light emitted from the LED devices 223. The material of the light diffusion means that can be used in the present invention is not limited to the transparent resin but may be a light-guiding material such as glass.

The auxiliary light source 220 included in the insect trap 100 according to the third embodiment is constituted of the LED devices 223, as described above. The LED devices 223 used as the auxiliary light source 220 of the light source 200 according to the present invention preferably has a maximum emission peak at about 565 nm in emission wavelength.

The light source including the light source 200 having two local emission peaks at about 545 nm and about 575 nm in emission wavelength and the auxiliary light source 220 having a maximum emission peak at about 565 nm in emission wavelength can attract white flies, thrips, aphids (winged), leafminer flies, and flies more efficiently.

Further, in the insect trap 100 according to the third embodiment, the trapping net 310 includes a first trapping net 330 and a second trapping net 340 that surrounds the outer periphery of the first trapping net 330. The thus configured trapping net 310 is applicable to all the embodiments of the insect trap 100 according to the present invention. The mesh size of the first trapping net 330 is preferably the same as that of the second trapping net 340.

The insect trap 100 according to the present invention does not operate at a temperature (15°C to 20°C) at which insects do not actively fly. To prevent the insects trapped in the trapping net 310 during the operation of the insect trap 100 from escaping during non-operation, the upper portion of the trapping net 310 preferably has a barb structure formed by double layers of the first and second trapping nets 330 and 340.

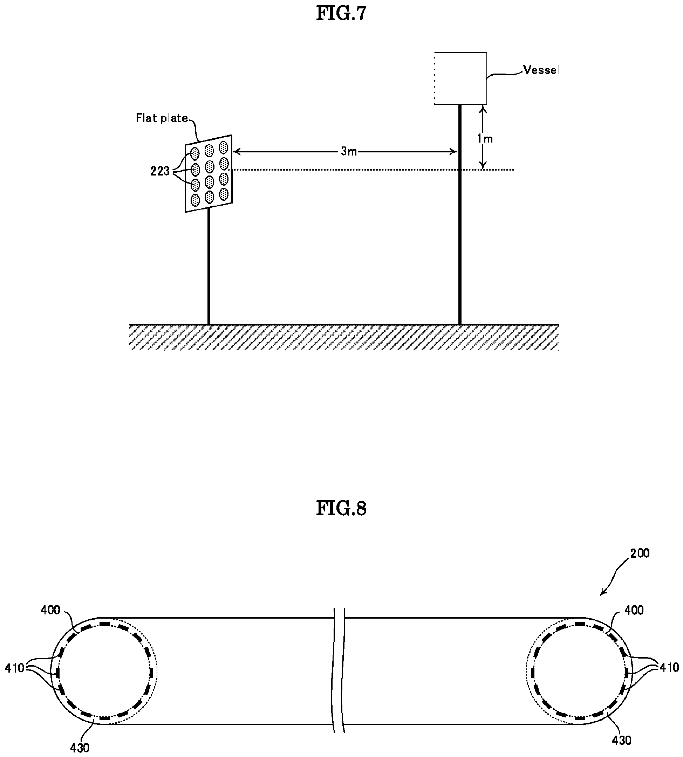

The following describes verification of effects of the auxiliary light source 220 included in the light source 200 according to the embodiment of the present invention. FIG. 7 is a view for explaining a configuration for verifying effects of the auxiliary light source 220 according to the third embodiment of the present invention.

In the verification illustrated in FIG. 7, the attraction effect of greenhouse whiteflies was examined using LED devices with various wavelengths simulating the auxiliary light source 220.

In this verification, 12 LED devices 223 were fixed to a flat plate and then covered with a transparent wrap sprayed with a sticky material. The number of trapped insects attracted to the LED devices 223 and stuck to the wrap was counted.

A vessel in which 200 greenhouse whitefly adults were put was installed in a place 1 m above and 3 m distant from the LED devices 223. A mesh material, through which the greenhouse whitefly adults can freely enter or exit from the vessel, was provided to one surface of the vessel. The greenhouse whitefly adults used were fed in advance. The one surface was opposed to the light source so as to allow the greenhouse whitefly adults to fly only from the side facing the light source 200.

The greenhouse whitefly adults that approached the light source 200 were stuck to the sprayed sticky material. The number of trapped insects was counted four hours after the installation of the vessel and light source. The experiment was carried out in a dark room at a temperature of 25°C. The results are shown in Table 2.

**[Table 2]**

| LED peak wavelength [nm] | Number of trapped insects | Ratio when the number of trapped insects at 565 nm is taken as 1 |
|---|---|---|
| 470 | 3 | 0.02 |
| 500 | 18 | 0.12 |
| 525 | 76 | 0.49 |
| 565 | 154 | 1 |
| 590 | 74 | 0.48 |
| 612 | 84 | 0.55 |
| 644 | 50 | 0.32 |

As shown in Table 2, the number of trapped insects is largest when the peak wavelength of the auxiliary light source 220 is 565 nm. Thus, normalization is made with the number of trapped insects at this peak wavelength taken as 1.

As is clear from Table 2, the embodiment using the auxiliary light source 220 having a peak wavelength of 565 nm exhibits the best results.

In the description of the present specification, reference to, e.g., "565 nm" of the peak wavelength of the auxiliary light source 220 includes a range from about -15 nm to +15 nm of "565 nm". That is, according to Table 2, it can be said that the number of trapped insects is largest when the emission wavelength of the auxiliary light source 220 has a maximum emission peak at about 565 nm (565 nm ± 15 nm) . In the present specification, the wavelength range is specified to be a designated wavelength with a margin of ± 15 nm. This is because reginal diversity exists even in the same type of insects, and thus there is a regional difference in the insect trapping effect of the light source with respect to the wavelength.

Further, according to Table 2, a sufficient insect trapping effect can be expected when an auxiliary light source having a peak wavelength in the range of 525 nm to 612 nm is used as the auxiliary light source 220 according to the present invention.

Further, the data shown in Table 2 can be applied to the light source 200 to be mainly used in the present invention, and a light source having a peak wavelength in the range of 525 nm to 612 nm is preferably used as the light source 200.

Thus, the light source 200 according to the present invention and the insect trap 100 using the thus configured light source 200 can efficiently attract and trap target pests such as white flies, thrips, aphids (winged), leafminer flies, and flies by means of light having a long wavelength range of 450 nm or longer.

The thus configured light source 200 according to the present invention and the insect trap 100 using the light source 200 efficiently attract the target pests, which can improve the probability of trapping/exterminating the target pests and increase the production amount of crops.

The insect trap 100 according to the third embodiment uses the auxiliary light source 220 having a maximum emission peak at about 565 nm in emission wavelength in addition to the light source 200 having two local emission peaks at about 545 nm and about 575 nm in emission wavelength to attract more efficiently target pests such as white flies, thrips, aphids (winged), leafminer flies, and flies, which can improve the probability of trapping/exterminating the target pests, thus further increasing the production amount of crops.

The following describes another embodiment of the present invention. In the above-described embodiments, the light source 200 is a fluorescent lamp applied with a coating film thereon, whereas an insect trap 100 according to the fourth embodiment of the present invention uses a light source 200 using an LED device in place of such a fluorescent lamp. The light source 200 used for the insect traps 100 according to the first through third embodiments can be substituted with the light source 200 using an LED device to be described below.

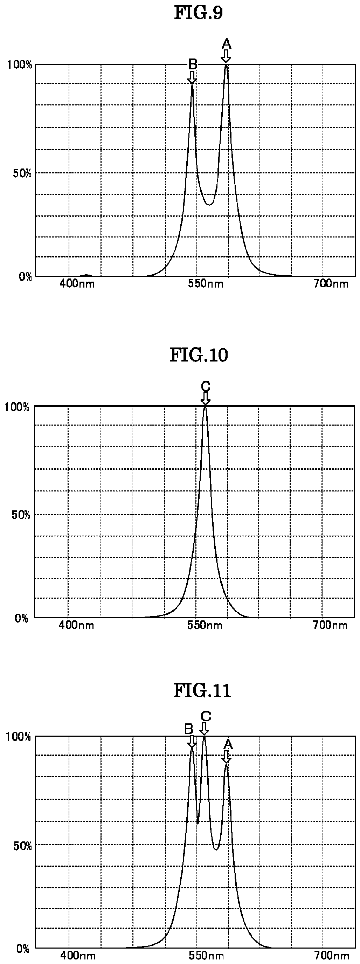

The following describes the light source 200 using an LED device. FIG. 8 is a view for explaining the configuration of the light source 200 used for an insect trap 100 according to the fourth embodiment of the present invention. FIG. 9 is a spectral characteristic diagram of the light source 200 according to the fourth embodiment of the present invention.

The light source 200 according to the fourth embodiment has a donut-shaped annular base 400, a plurality of LED devices 410 disposed at the outer peripheral edge of the annular base 400, and a light diffusion resin 430 provided so as to surround the annular base 400 and the plurality of LED devices 410. The light diffusion resin 430 is a substantially transparent light diffusion means for dispersing and diffusing light having directivity emitted from the LED devices 410. As such a light diffusion means, a glass material can be used in place of the light diffusion resin 430.

The plurality of LED devices 410 include at least two types of LED devices: LED devices having a maximum emission peak at about 545 nm in emission wavelength; and LED devices having a maximum emission peak at about 575 nm. It is noted that, the present invention can be achieved by using LED devices 410 of a single type having a maximum emission peak at about 560 nm or about 565 nm.

FIG. 9 illustrates the spectral characteristics of the light source 200 according to the fourth embodiment including the above two types of LED devices. The light source 200 as a whole has local peaks at about 545 nm and about 575 nm. Further, the two types of LED devices are arranged such that the light source 200 satisfies a relationship of 0.7 < A/B < 1.7 when the emission intensities of the light source 200 as a whole at about 545 nm and about 575 nm are A and B, respectively, in FIG. 9.

As described in the fourth embodiment, the light source 200 using LED devices of one or two or more types can be used in place of the light source (used in the first embodiment) constituted by a white fluorescent lamp applied with a coating film thereon. According to the insect trap 100 using the light source 200 according to the fourth embodiment, it is possible to obtain the effects of the above embodiments while using the energy-efficient and long-lasing light source 200.

The following describes another embodiment of the present invention. The light source mainly used in the above-described embodiments has two local emission peaks at about 545 nm and about 575 nm in emission wavelength. In place of such a light source having two local emission peaks, an insect trap 100 according to a fifth embodiment uses a light source 200 having a maximum emission peak at the average emission wavelength between about 545 nm and about 575 nm (or about 585 nm), i.e., at about 560 nm or about 565 nm.

More specifically, the light source 200 used in the fifth embodiment has a maximum emission peak at about 560 nm or about 565 nm in a long wavelength range of 450 nm or longer.

FIG. 10 is a spectral characteristic diagram of the light source 200 used for the insect trap 100 according to the fifth embodiment of the present invention. For example, an LED device emits light having spectral characteristics shown in FIG. 10. On the other hand, a fluorescent lamp having such spectral characteristics that exhibit a maximum emission peak at about 560 nm (or about 565 nm) can be obtained by appropriately selecting a phosphor to be applied to the inner wall of the fluorescent lamp.

The insect trap 100 according to the present invention can also be achieved by using the light source 200 according to the fifth embodiment having a maximum emission peak at about 560 nm (or about 565 nm), and the thus achieved insect trap 100 can provide the effects of the above embodiments.

The following describes another embodiment of the present invention. The insect trap 100 according to the third embodiment illustrated in FIG. 6 uses the two light sources: the main light source 200 having two local emission peaks at about 545 nm and about 575 nm in emission wavelength; and the auxiliary light source 220 having a maximum emission peak at about 565 nm in emission wavelength.

On the other hand, a light source 200 used for an insect trap 100 according to a sixth embodiment has three local emission peaks at about 545 nm, about 565 nm, and about 575 nm in emission wavelength.

FIG. 11 is a spectral characteristic diagram of the light source 200 used for the insect trap 100 according to the sixth embodiment of the present invention. The light source 200 exhibiting such spectral characteristics can be constituted by combining an LED device having a maximum emission peak at about 545 nm in emission wavelength, an LED device having a maximum emission peak at about 565 nm in emission wavelength, and an LED device having a maximum emission peak at about 575 nm in emission wavelength.

More specifically, the light source 200 used in the sixth embodiment has three local emission peaks in the range of about 500 nm to about 650 nm in emission wavelength. The three local emission peaks are located at about 545 nm, about 565 nm, and about 575 nm. When the emission intensities at about 545 nm and about 575 nm are A and B, respectively, the light source 200 satisfies a relationship of 0.7 < A/B < 1.7.

It is more preferable for the light source 200 according to the sixth embodiment to satisfy a relationship of 1.0 < A/B < 1.5. Further, it is still more preferable for the light source 200 according to the sixth embodiment to satisfy a relationship of 1.1 < A/B < 1.4.

The insect trap 100 according to the sixth embodiment using the light source 200 having three local emission peaks at about 545 nm, about 565 nm, and about 575 nm in emission wavelength can more efficiently attract white flies, thrips, aphids (winged), leafminer flies, and flies. Further, the insect trap 100 can provide the effects of the above embodiments while using the energy-efficient and long-lasting light source 200.

Although the LED devices of three types are combined to constitute the light source 200 according to the sixth embodiment, the light source described in the present embodiment can be obtained by using a fluorescent lamp itself or a florescent lamp applied with a coating film thereon.

The insect trap according to the present invention uses a light source having a long wavelength range of 450 nm or longer, more specifically, a light source having a maximum emission peak at about 560 nm in a long wavelength range of 450 nm or longer to attract and trap target pests such as white flies, thrips, aphids (winged), leafminer flies, and flies. Further, the insect trap according to the present invention is provided with the mortar-shaped reflection part having a coating film with a color similar to a hue within the range of 10YR to 10Y in the Munsell color system and efficiently attracts the target pests by a synergetic effect with the above light source to thereby improve the probability of trapping/exterminating the target pests and in turn increase the production amount of crops.

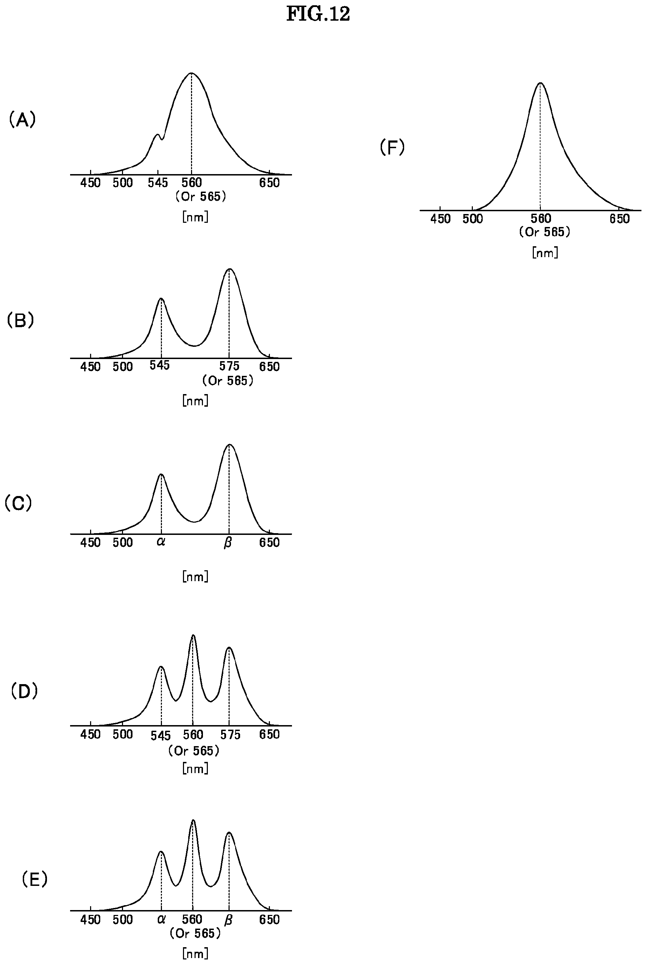

The light source 200 used in the present invention will be summarized below. FIGS. 12A to 12F are schematic spectral characteristic diagrams of the light source 200 and auxiliary light source 220 used for the insect trap 100 according to the present invention.

FIGS. 12A to 12E illustrate preferred spectral characteristics of the light source 200, and FIG. 12F illustrates preferred spectral characteristics of the auxiliary light source 220.

The spectral characteristics of the light source 200 illustrated in FIGS. 12A to 12E can be achieved by the fluorescent lamp or LED device. On the other hand, the spectral characteristics of the auxiliary light source 220 illustrated in FIG. 12F is basically achieved by the LED device.

FIG. 12A illustrates spectral characteristics having a maximum emission peak at about 560 nm (or about 565 nm) in a long wavelength range of 450 nm or longer. Light that causes effective phototaxis in insects basically has a maximum emission peak at about 560 nm (or about 565 nm).

FIG. 12B illustrates a spectral characteristic pattern having two local emission peaks at about 545 nm and about 575 nm (or about 585 nm). In this pattern, 560 nm (or 565 nm) is the arithmetic average of the peak values of 545 nm and 575 nm (585 nm). The spectral characteristics having such a pattern also causes effective phototaxis in insects.

FIG. 12C illustrates a spectral characteristic pattern having two local emission peaks at about wavelength α [nm] and about wavelength β [nm]. The values that satisfy (α + β) /2 = 560 (or 565) are selected as α and β. In this pattern as well, 560 nm (or 565 nm) is the average of the two peak wavelengths (α, β).

FIG. 12D illustrates a spectral characteristic pattern having three local emission peaks at about 545 nm, about 560 nm (or about 565 nm), and about 575 nm (or about 585 nm). In this pattern, 560 nm (or 565 nm) is the arithmetic of the peak wavelengths of 545 nm and 575 nm (585 nm).

FIG. 12E illustrates spectral characteristics having three local emission peaks at about wavelength α [nm], about 560 nm (or about 565 nm), and about wavelength β [nm]. The values that satisfy (α + β) /2 = 560 (or 565) are selected as α and β. In this pattern as well, 560 nm (or 565 nm) is the average of the two peak wavelengths (α, β).

FIG. 12F illustrates spectral characteristics having a maximum emission peak at about 560 nm (or about 565 nm). It is important for the spectral characteristics of the auxiliary light source 220 to have a maximum emission peak at about 560 nm (or at 565 nm) in order to cause effective phototaxis in insects.

### Industrial Applicability

The present invention relates to an insect trap for attracting and exterminating pests, which is used in a farm to reduce feeding damage to cultivated crops caused by pests. Such an insect trap traditionally uses a blue fluorescent lamp as a light source to attract nocturnal insects. However, the attraction efficiency of the blue fluorescent lamp for target pests is not necessarily high. This reduces the probability of trapping/exterminating the target pests, resulting in poor trapping performance. On the other hand, an insect trap according to the present invention uses a light source having a long wavelength range of 450 nm or longer, more specifically, a light source having a maximum emission peak at about 560 nm or about 566 nm to attract and trap target pests such as white flies, thrips, aphids (winged), leafminer flies, and flies. Further, the insect trap according to the present invention is provided with the mortar-shaped reflection part having a coating film with a color similar to a hue within the range of 10YR to 10Y in the Munsell color system. Thus, the insect trap according to the present invention efficiently attracts the target pests by a synergetic effect between the light source and the coating film to thereby improve the probability of trapping/exterminating the target pests and in turn increase the production amount of crops, and thus assures very high industrial applicability.

### Reference Signs List

- 110:: Insect trap
- 110:: Hanging wire
- 140:: Mesh
- 145:: Hole part
- 150:: Conical part
- 151:: Fixing fitting
- 160:: Mortar-shaped reflection part
- 170:: Cylindrical part
- 190:: Fan
- 200:: Light source
- 220:: Auxiliary light source
- 223:: LED device
- 230:: Light diffusion resin (light diffusion means)
- 310:: Trapping net
- 330:: First trapping net
- 340:: Second trapping net
- 400:: Annular base
- 410:: LED device
- 430:: Light diffusion resin (light diffusion means)

## Claims

1. An insect trap **characterized by** comprising:
a light source emitting light that causes phototaxis in insects;
a mortar-shaped reflection part disposed vertically below the light source and reflecting the light emitted from the light source vertically upward;
a cylindrical part disposed vertically below the mortar-shaped reflection part so as to extend from the mortar-shaped reflection part;
a fan generating an airflow in a direction sucking air from the mortar-shaped reflection part into the cylindrical part; and
a net disposed vertically below the fan and trapping insects, wherein
the light source has a maximum emission peak at about 560 nm or about 565 nm in emission wavelength, and
the mortar-shaped reflection part has a coating film with a color similar to a hue within the range of 10YR to 10Y in the Munsell color system.

2. An insect trap **characterized by** comprising:
a light source emitting light that causes phototaxis in insects;
a mortar-shaped reflection part disposed vertically below the light source and reflecting the light emitted from the light source vertically upward;
a cylindrical part disposed vertically below the mortar-shaped reflection part so as to extend from the mortar-shaped reflection part;
a fan generating an airflow in a direction sucking air from the mortar-shaped reflection part into the cylindrical part; and
a net disposed vertically below the fan and trapping insects, wherein
the light source has two local emission peaks in the range of about 500 nm to about 650 nm in emission wavelength, and
the mortar-shaped reflection part has a coating film with a color similar to a hue within the range of 10YR to 10Y in the Munsell color system.

3. An insect trap **characterized by** comprising:
a light source emitting light that causes phototaxis in insects;
a mortar-shaped reflection part disposed vertically below the light source and reflecting the light emitted from the light source vertically upward;
a cylindrical part disposed vertically below the mortar-shaped reflection part so as to extend from the mortar-shaped reflection part;
a fan generating an airflow in a direction sucking air from the mortar-shaped reflection part into the cylindrical part; and
a net disposed vertically below the fan and trapping insects, wherein
the light source has two local emission peaks at about 545 nm and about 575 nm in emission wavelength, and
the mortar-shaped reflection part has a coating film with a color similar to a hue within the range of 10YR to 10Y in the Munsell color system.

4. The insect trap according to claim 3, **characterized in that**
when emission intensities of the light source at about 545 nm and about 575 nm are A and B, respectively, a relationship of 0.7 < A/B < 1.7 is satisfied.

5. An insect trap **characterized by** comprising:
a light source emitting light that causes phototaxis in insects;
a mortar-shaped reflection part disposed vertically below the light source and reflecting the light emitted from the light source vertically upward;
a cylindrical part disposed vertically below the mortar-shaped reflection part so as to extend from the mortar-shaped reflection part;
a fan generating an airflow in a direction sucking air from the mortar-shaped reflection part into the cylindrical part; and
a net disposed vertically below the fan and trapping insects, wherein
the light source has three local emission peaks at about 545 nm, about 565 nm, and about 575 in emission wavelength, and
the mortar-shaped reflection part has a coating film with a color similar to a hue within the range of 10YR to 10Y in the Munsell color system.

6. The insect trap according to claim 5, **characterized in that**
when emission intensities of the light source at about 545 nm and about 575 nm are A and B, respectively, a relationship of 0.7 < A/B < 1.7 is satisfied.

7. The insect trap according to any one of claims 1 to 6, **characterized in that**
the light source is constituted by a fluorescent lamp applied with a coating film thereon.

8. The insect trap according to any one of claims 1 to 7, **characterized in that**
the light source is constituted by an LED device.

9. The insect trap according to any one of claims 1 to 8, **characterized in that**
a mesh having a mesh size less than 5 mm is disposed in an insect suction space of the mortar-shaped reflection part.

10. The insect trap according to any one of claims 1 to 9, **characterized by** further comprising an auxiliary light source having a maximum emission peak at about 565 nm in emission wavelength.

11. The insect trap according to claim 10, **characterized in that**
the auxiliary light source is constituted by an LED device.
